# DEMANDE DE BREVET EUROPEEN

(11) **EP 1 217 401 A1**
(43) Date de publication de la demande: **26.06.2002**
(21) Numéro de dépôt: 01420235.2
(22) Date de dépôt: 11.12.2001
(51) Int. Cl.: G02B 6/36, G02B 6/35

(54) **Dispositif permettant le positionnement et le maintien de l'extrémité d'une fibre optique à l'intérieur d'un substrat**

(30) Priorité: 19.12.2000 FR 0016576
(71) Demandeur: Memscap, 38330 Saint Ismier (FR)
(72) Inventeur: Delpoux, Arnaud, 38240 Meylan (FR); Karam, Jean-Michel, 38000 Grenoble (FR); Iannello, Marie-Ange, 38360 Sassenage (FR); Zhang, Nan, 55317 MN Chanhassen (US); Nault, Gary, 55438 MN Bloomington (US)
(74) Mandataire: Palix, Stéphane

(57) **Abrégé**

Dispositif permettant le positionnement et le maintien de l'extrémité (4) d'une fibre optique (3) à l'intérieur d'un substrat (1), caractérisé en ce que :
- le substrat (1) comporte une rainure (2) destinée à accueillir l'extrémité (4) de la fibre optique (3), ladite rainure (2) possédant au moins une paroi plane (8) perpendiculaire au plan principal (9) du substrat (1) ;
- la rainure (2) comporte une partie mobile (5), localisée sur la face opposée à la paroi plane (8), et apte à se déplacer en direction de ladite paroi plane (8) entre deux positions, à savoir :
   . une position escamotée dans laquelle l'extrémité de la fibre optique (3) peut pénétrer librement dans la rainure (2) ;
   . une position de blocage dans laquelle la partie mobile (5) vient au contact de la fibre optique (3) pour la plaquer contre ladite paroi plane (8);
- il comporte des moyens (21, 24) permettant d'exercer une force sur la partie mobile (5) pour en provoquer le déplacement par rapport à la paroi plane (8).

## Description

### Domaine technique

L'invention se rattache au domaine de la micro-électronique, et plus précisément aux systèmes d'alignement de fibres optiques. Elle concerne plus particulièrement un dispositif permettant le positionnement et le maintien de l'extrémité d'une fibre optique à l'intérieur d'un substrat. L'invention trouve une application dans de très nombreux composants tels que des commutateurs ou switchs, des atténuateurs, ou plus généralement tous les composants microélectroniques connectés à des fibres optiques.

### Techniques antérieures

Comme on le sait, les composants opto-électroniques connectés à des fibres optiques sont particulièrement sensibles aux contraintes d'alignement. En effet, les défauts d'alignement sont des facteurs très importants de pertes dans les systèmes optiques notamment dans le cas des commutateurs, où les différentes fibres doivent être plaçées précisément dans le trajet optique l'une de l'autre.

On conçoit donc que le positionnement des fibres optiques à l'intérieur du substrat doit être réalisé avec la plus grande précision possible, notamment compte tenu du faible diamètre des fibres optiques classiquement utilisées, voisin de 125 micromètres.

Plusieurs solutions ont déjà été proposées pour assurer un positionnement précis de la fibre optique, mais toutes ces solutions possèdent des inconvénients.

Ainsi, dans le document US 5 276 762, on a décrit une solution consistant à mettre en place les fibres optiques dans des rainures en forme de V. Ces rainures, généralement appelées "V groove", reçoivent la fibre optique avec un contact sur deux génératrices de cette dernière. La solution décrite dans ce document consiste à recouvrir les extrémités des fibres optiques d'une gaine en un matériau magnétique. Un champ magnétique est appliqué à proximité des extrémités de la fibre pour générer une force qui plaque l'extrémité de la fibre sur le substrat.

Cette disposition, permet d'assurer le maintien des fibres optiques dans les rainures, mais elle présente en revanche des inconvénients. En effet, l'extrémité de la fibre optique est recouverte d'une gaine supplémentaire dont l'épaisseur doit être calibrée et constante pour ne pas engendrer de défauts d'alignement des fibres optiques.

En outre, la présence de cette gaine supplémentaire augmente les dimensions du dispositif d'alignement et donc son encombrement. Cet encombrement est également augmenté du fait de la présence du circuit électromagnétique nécessaire pour l'application du champ magnétique de maintien.

En outre, pour assurer un maintien continu de la fibre, il est nécessaire d'appliquer le champ magnétique en continu, ce qui génère une consommation d'énergie importante. Enfin, le matériau magnétique utilisé pour former la gaine supplémentaire, et la présence du champ magnétique de maintien peuvent être à l'origine de perturbations dans le système optique.

Dans le document US 6 101 306, on a proposé une autre solution qui consiste à mettre en place les extrémités des fibres optiques dans une rainure, puis à les recouvrir de colle, et enfin à mettre en place une structure supérieure formant couvercle. Par phénomènes de capillarité entre la rainure et le couvercle, on réduit ainsi la formation de bulles d'air à l'intérieur de la colle, ce qui améliore l'adhésion de la fibre optique. Cette solution, si elle permet un maintien ferme de la fibre optique, présente en revanche de multiples inconvénients.

En effet, le positionnement de la fibre, dans sa structure d'alignement, est définitif. Une fois que cet alignement est réalisé, il est impossible de le modifier ou bien encore de changer la fibre optique, sans endommager le dispositif. En outre, l'alignement de la fibre optique le long de la rainure n'est pas réellement assuré. En effet, la répartition de la colle entre la fibre optique et la rainure peut être aléatoire, et n'est en tout cas pas contrôlée. Ainsi, le jeu existant entre la fibre optique et les bords de la rainure peut varier le long de la zone de collage. Cela peut induire des défauts d'alignement, ou bien encore des courbures de la fibre optique qui engendrent des pertes d'énergie.

On connaît également une autre solution qui consiste à utiliser des rainures en forme de U, ou plus généralement avec deux parois latérales perpendiculaires au plan principal du substrat. Une telle rainure est équipée sur ses faces latérales de plusieurs lamelles flexibles formant des ressorts. Ces lamelles sont orientées dans le sens de pénétration de la fibre dans le substrat. Lorsque la fibre optique est mise en place dans la rainure, les lamelles latérales sont déformées et exercent par leur élasticité une force de maintien sur la fibre. La fibre est ensuite collée pour assurer un maintien définitif.

Cette solution présente un certain nombre d'inconvénients. En effet, la mise en place est définitive, car la fibre optique est collée à l'intérieur de la rainure. En outre, avant même le collage, il est très difficile de modifier le positionnement de la fibre optique à l'intérieur de la rainure, puisqu'une traction sur la fibre engendre des contraintes importantes au niveau des zones de contact avec les lames inclinées, qui ont tendance à s'opposer au retrait de la fibre.

En outre, le centrage de la fibre optique et donc son alignement est défini par les raideurs relatives des différentes lames disposées de part et d'autre de la fibre, de sorte qu'une différence de raideur de ces lamelles engendre obligatoirement un défaut d'alignement.

Par ailleurs, une telle géométrie est déterminée pour un diamètre particulier de fibres optiques, et ne permet pas d'accueillir des fibres de différents diamètres.

Comme on a décrit dans le document EP 0 429 877, un dispositif permettant la mise en place et le maintien de fibres optiques dans un substrat. Un tel dispositif comprend une portion du substrat qui forme une lame déformable jouant un effet de ressort. L'inconvénient majeur de cette solution réside dans le fait qu'une certaine pression est exercée sur la fibre au fur et à mesure de sa mise en place dans le substrat. L'existence de contraintes exercées de façon non uniforme sur une partie de la fibre optique est préjudiciable à la bonne qualité des opérations de mise en place.

En outre, un tel dispositif ne permet pas le repositionnement des fibres optiques à volonté, puisque la position des fibres optiques est bloquée par la présence d'une portion de couvercle venant bloquer les capacités de déformation des portions flexibles formant ressort.

On a également décrit dans le document EP 0 515 784 un dispositif de blocage de fibres optiques à l'intérieur d'un substrat. Ce dispositif fonctionne par blocage des fibres optiques au niveau de pièces formant des coins mobiles. Plus précisément, la fibre optique est mise en place entre deux pièces dont une extrémité forme un biseau, et qui peut coulisser à l'intérieur d'une pièce formant un biseau complémentaire. Un tel dispositif présente plusieurs inconvénients, et notamment le fait que le positionnement de la fibre optique est définitif, puisque lorsque les deux portions en biseau sont emmanchées, il est impossible de les déplacer et donc de repositionner la fibre optique de manière différente.

En outre, la précision sur le positionnement transversal de la fibre n'est pas optimale, car elle dépend des différences de raideur et de déformabilité des différentes pièces en biseau. Autrement dit une légère différence dans la forme des biseaux situés de part et d'autre de la fibre peut engendrer un décalage latéral de la fibre, et donc un défaut d'alignement.

Un problème que se propose donc de résoudre l'invention est celui d'assurer un maintien ferme de l'extrémité de la fibre optique tout en conservant une possibilité de régler le positionnement après la première mise en place.

Un autre problème que se propose de résoudre l'invention est celui d'assurer un alignement parfait de la fibre par rapport à une zone de référence fixe du substrat.

### Exposé de l'invention

L'invention concerne donc un dispositif permettant le positionnement et le maintien de l'extrémité d'une fibre optique à l'intérieur d'un substrat.

Ce dispositif se caractérise en ce que :
- le substrat comporte une rainure destinée à accueillir l'extrémité de la fibre optique, ladite rainure possédant au moins une paroi plane perpendiculaire au plan principal du substrat ;
- la rainure comporte une partie mobile, localisée sur la face opposée à la paroi plane, et apte à se déplacer en direction de ladite paroi plane entre deux positions, à savoir :
   . une position escamotée dans laquelle l'extrémité de la fibre optique peut pénétrer librement dans la rainure ;
   . une position de blocage dans laquelle la partie mobile vient au contact de la fibre optique pour la plaquer contre ladite paroi plane ;
- il comporte des moyens permettant d'exercer une force sur la partie mobile pour en provoquer le déplacement par rapport à la paroi plane.

Autrement dit, la rainure réalisée dans le substrat comporte une paroi qui constitue un mur de référence pour le positionnement de la fibre optique. La position optimale d'alignement de la fibre optique est localisée de façon très précise par la construction de ce mur de référencement par rapport au substrat. Selon l'invention, la partie mobile de la rainure peut être déplacée, soit pour autoriser la pénétration de la fibre optique dans la rainure, soit en interdire le retrait tout en la plaquant contre le mur de référencement, et donc en assurant l'alignement optimal.

Le déplacement de cette partie mobile peut être commandé à souhait de sorte que l'on peut escamoter la partie mobile pour la mise en place de la fibre optique, ou bien encore rapprocher de la paroi formant mur de référencement lorsque l'on souhaite maintenir la fibre optique.

Cette dernière n'est donc soumise à aucune contrainte mécanique inutile. Son repositionnement peut être réalisé à tout moment, ce qui permet de régler l'alignement de façon optimale.

Selon une autre caractéristique de l'invention, le dispositif peut comporter également des moyens de rappel aptes à s'opposer au déplacement de la partie mobile sous l'action de la force caractéristique.

Autrement dit, la partie mobile caractéristique peut se déplacer dans un sens sous l'effet de la force commandée, et dans le sens opposé lorsque cette force disparaît, et que seuls les moyens de rappel sont actifs.

Selon différentes variantes d'exécution, les moyens permettant d'exercer la force caractéristique sur la partie mobile permettent de déplacer cette dernière soit de la position escamotée vers la position de blocage, soit de la position de blocage vers la position escamotée.

Autrement dit, l'application de la force caractéristique peut provoquer l'ouverture ou l'élargissement de la rainure et la libération de la fibre optique, ou inversement le pincement de la fibre optique lorsque celle-ci est déjà mise en place dans la rainure.

Avantageusement en pratique, les moyens de rappel peuvent être formés de deux poutres en substrat reliant la partie mobile au reste du substrat, ces deux poutres étant orientées sensiblement parallèlement à l'axe principal de la rainure. De la sorte, les poutres sont sollicitées soit en flexion ou en flambage. Les moyens de rappels peuvent, dans certaines variantes, être constitués d'une structure de type ressort.

La force caractéristique exercée sur la partie mobile peut être de natures très diverses. Préférentiellement, elle sera de nature électrostatique, mais peut également être d'origine électrothermique, piézoélectrique, magnétostatique ou simplement mécanique.

Ainsi, dans la variante électrostatique de l'invention, les moyens pour exercer la force caractéristique sur la partie mobile peuvent comporter deux ensembles de lamelles formant deux peignes interdigités, un de ces peignes étant solidaire de la partie mobile, l'autre peigne étant solidaire du reste du substrat.

L'application d'une tension électrique entre les deux peignes en provoque le rapprochement, et donc le déplacement de la partie mobile par rapport au reste du substrat.

Selon les variantes de fonctionnement déjà évoquées, l'application de la tension électrique peut provoquer le passage de la partie mobile de la position escamotée à la position de blocage, la disparition de cette tension permettant aux moyens de rappel de provoquer le retour de la partie mobile en position escamotée. Cette première forme d'exécution peut par exemple être utilisée pour assurer temporairement le blocage de la fibre optique juste après son introduction. Il est ainsi possible de positionner définitivement la fibre optique par un collage approprié, puis d'annuler la tension appliquée entre les peignes, de sorte que la partie mobile s'écarte de la fibre optique et retourne en position escamotée.

Dans une seconde variante, l'application de la tension électrique peut provoquer le passage de la partie mobile de la position de blocage vers la position escamotée, la disparition de cette tension permettant aux moyens de rappel de provoquer le retour de la partie mobile en position de blocage.

Autrement dit, la partie mobile est, par défaut, située en position de blocage grâce à l'action des moyens de rappel. Lors de la mise en place de la fibre optique, l'application de la tension écarte la partie mobile du centre de la rainure et autorise ainsi la mise en place de la fibre optique. Lorsque la fibre optique est convenablement positionnée, l'annulation de la tension entre les deux peignes caractéristiques annule la force électrostatique. Les moyens de rappel provoquent alors le retour de la partie mobile en position de blocage de telle manière que la fibre optique est plaquée dans la rainure contre le mur de référencement.

Cette solution présente l'avantage d'une consommation électrique limitée aux seules opérations de mise en place de la fibre optique, la consommation étant ensuite nulle lorsque l'alignement est réalisé puisque le maintien est assuré par la force appliquée par les moyens de rappel.

### Description sommaire des figures

La manière de réaliser l'invention ainsi que les avantages qui en découlent ressortiront bien de la description du mode de réalisation qui suit, à l'appui des figures annexées, dans lesquelles :
La figure 1 est une vue de dessus de la zone du substrat incluant la rainure et la partie mobile conforme à l'invention, dans laquelle la partie mobile est montrée en position de blocage.
La figure 2 est une vue en coupe selon le plan II-II' de la figure 1.
La figure 3 est une vue en coupe similaire à celle de la figure 1, dans laquelle la partie mobile est montrée en position escamotée.
La figure 4 est une vue en coupe selon un plan IV-IV' de la figure 3.

### Manière de réaliser l'invention

Comme déjà évoqué, l'invention concerne un dispositif de maintien d'une fibre optique à l'intérieur d'un substrat pouvant faire partie de microcomposants de taille très diverses, tels que des commutateurs, des atténuateurs ou tout microcomposant optoélectronique.

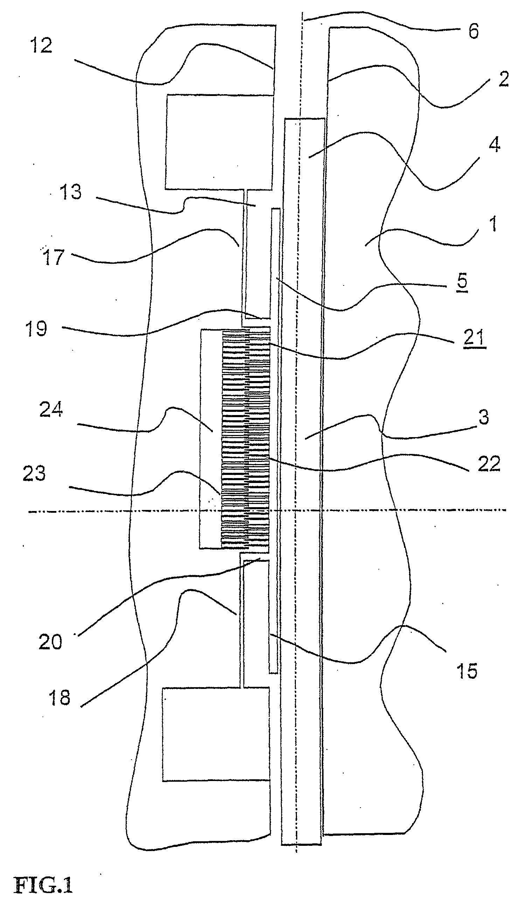

Un exemple non limitatif d'un tel dispositif est illustré à la figure 1. De façon générale, le substrat (1) comporte une rainure rectiligne (2) à l'intérieur de laquelle peut venir se loger l'extrémité (4) d'une fibre optique (3). Conformément à l'invention, la rainure est équipée d'une partie mobile (5) apte à se déplacer perpendiculairement à l'axe longitudinal (6) de la rainure.

Plus précisément, la géométrie de la rainure (2) est telle qu'elle permet un positionnement précis et un alignement parfait de la fibre optique. Ainsi, la rainure (2) possède une paroi latérale (8) qui est perpendiculaire au plan principal (9) du substrat. Cette paroi latérale (8) constitue la référence de positionnement vis à vis de laquelle la fibre optique (3) doit être placée pour obtenir l'alignement optimal. La rainure (2) possède également un fond plat (10) sur lequel peut reposer la fibre optique (3). La rainure (2) possède également une autre paroi latérale (12) dont la forme n'est pas critique, mais qui peut être avantageusement plane.

La paroi latérale (12) est interrompue dans la zone où est présente la partie mobile (5). Plus précisément, la paroi latérale (12) définit un logement (13) à l'intérieur duquel peut venir se placer la partie mobile (5), et où sont localisés les moyens permettant d'exercer une force sur la partie mobile (5). Plus précisément, la partie mobile (5) telle qu'illustrée à la figure 1, comporte une plaquette longitudinale (15) de géométrie sensiblement parallèlelipédique. La face principale de cette plaquette (15) est parallèle aux parois latérales (8, 12) de la rainure. Cette plaquette (15) est reliée à deux poutres (17, 18) via deux segments (19, 20) perpendiculaires au plan principal de la plaquette (15).

Plus précisément, les poutres (17, 18) forment des lamelles flexibles sensiblement parallèles à l'axe longitudinal (6) de la rainure lorsque la partie mobile (5) est en position de blocage tel qu'illustré à la figure 1.

Entre les segments (19, 20) reliant les poutres (17, 18) à la plaquette (15), la partie mobile (5) comporte une pluralité de lamelles (22) régulièrement espacées, perpendiculaires à la plaquette (15), et dirigées à l'extérieur de la rainure (2). L'ensemble de ces plaquettes (22) forment un peigne équipotentiel (21).

En regard du peigne (21) formé par les lamelles (22), le logement (13) comporte un peigne complémentaire (24), comportant des lamelles (23), également espacées. Les différentes dents (23) du peigne (24) sont situées entre les lamelles (22) du peigne (21) de la partie mobile (5).

Dans la position illustrée à la figure 1, la partie mobile (5) est dans sa position de blocage correspondant à la situation dans laquelle elle est le plus proche de la paroi plane (8) de la rainure (2).

Dans cette situation, les dents (22, 23) des peignes (21, 24) possèdent une fraction de leur longueur en regard les unes des autres. Ainsi, l'application d'une tension continue entre la partie mobile (5) et le peigne (24) provoque l'apparition d'un champ électrique entre les surfaces en regard des lamelles (22) et (23). Les lamelles (22) de la partie mobile (5) sont donc attirées par les lamelles (23) du peigne fixe (24).

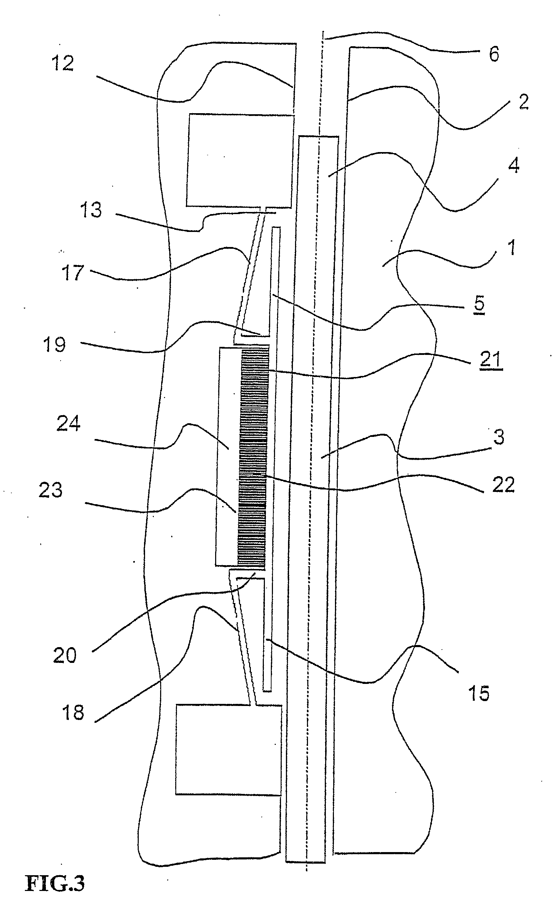

La partie mobile (5) se déplace donc comme illustré à la figure 3 où l'on observe que les lamelles (22) du peigne (21) ont pénétré entre les lamelles (23) du peigne (24) pour maximiser les surfaces en regard.

Le déplacement de la plaquette (15) engendre la déformation des poutres (17, 18) qui s'opposent au déplacement de la plaquette en direction de l'extérieur de la rainure. La position d'équilibre est atteinte lorsque la force électrostatique existant entre les peignes (21, 23) est égale à la réaction mécanique des poutres (17, 18), orientées en direction de la rainure (2).

Il est à noter que cette position d'équilibre peut être adaptée en fonction de la tension continue appliquée entre les peignes (21) et (24).

Dans la forme illustrée à la figure 3, la plaquette (15) est escamotée à l'intérieur du logement (13), de sorte que la face de la plaquette (15) orientée vers la rainure se trouve au-delà de la position de la paroi latérale (12) de la rainure.

La rainure (2) possède alors sa largeur maximale ce qui permet l'introduction de l'extrémité (4) de la fibre optique sans encombre.

En pratique, la mise en place d'une fibre optique se fait de la façon suivante.

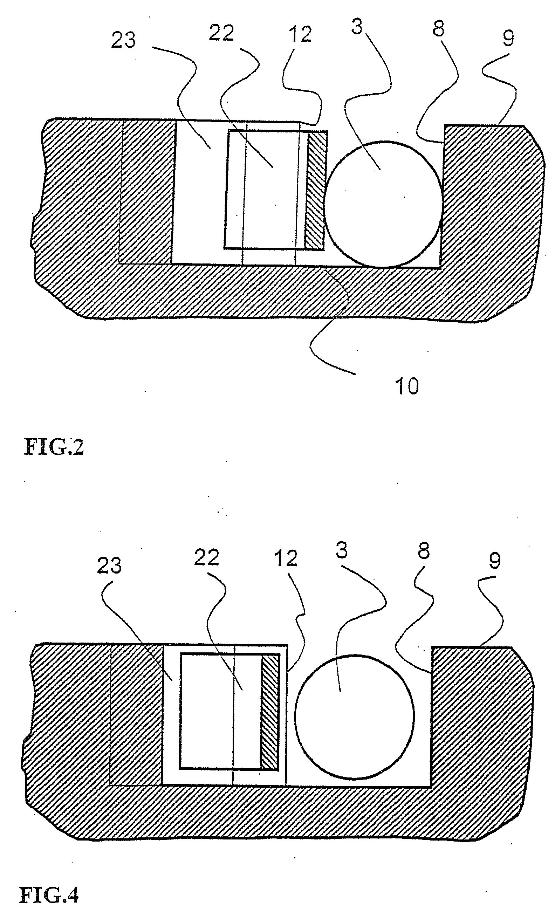

On applique d'abord une tension continue entre les deux peignes (21) et (24) pour escamoter la partie mobile (5) à l'intérieur du logement (13) du substrat. La fibre optique (3) est introduite à l'intérieur du substrat dans la rainure (2). Lorsque la longueur de fibre introduite dans le substrat est suffisante, on cesse d'appliquer la tension continue entre les peignes (21) et (24). Les poutres (17) et (18) reprennent leur position de repos, entraînant dans leur mouvement la plaquette (15). Cette plaquette (15) vient donc au contact de la fibre optique (3) comme illustré aux figures 1 et 2. La force exercée par la plaquette (15) sur la fibre (3) plaque cette dernière contre la paroi (8) de la rainure (2). Lorsque la fibre optique (3) est au contact de la paroi (8), elle est positionnée de façon très précise par rapport à la référence de position que constitue cette paroi (8).

En outre, la force de plaquage exercée par les poutres (17, 18) via la plaquette (15) sur la fibre optique (3) est telle qu'elle assure un maintien de la fibre (3) dans la rainure (2).

A titre d'exemple, la pression exercée sur la fibre peut atteindre environ un MegaPascal (1 Mpa) pour une fibre optique d'un diamètre de 125 microns, qui vient au contact de la plaquette (15) sur une longueur de 2,4 millimètres, et pour une hauteur de contact de l'ordre de 5 microns.

Bien entendu, cette force de plaquage peut être adaptée par les caractéristiques mécaniques des poutres (17, 18) et par la longueur de la plaquette (15), mesurée dans le sens longitudinal de la rainure.

Il est à noter que la force de plaquage peut être annulée à tout moment par l'application d'une tension entre les peignes (21) et (24). De la sorte, il est possible de régler la longueur d'introduction de la fibre optique, sans risquer de l'endommager.

Dans la variante illustrée, la position de repos de la partie mobile, c'est-à-dire pour une tension nulle entre les peignes (21) et (24) correspond à une position de blocage dans laquelle la fibre optique est maintenue à l'intérieur de la nervure (2).

La tension n'est appliquée que lorsque l'on souhaite escamoter la partie mobile (5), c'est-à-dire lors des phases de mise en place de la fibre optique (3). Cette solution est avantageuse en ce qui concerne la consommation électrique du dispositif.

Comme déjà dit, la paire de peignes (21, 24), siège d'une force électrostatique, peut être remplacée par tout autre moyen de nature différente, permettant d'exercer une force sur la plaquette (15) perpendiculairement à l'axe (6) de la rainure (2).

Il peut s'agir par exemple d'un mécanisme fonctionnant par actionnement électrothermique. Un tel actionneur peut inclure des bilames fonctionnant sur le principe de différences de dilatation de deux matériaux associés en couches adjacentes. Lorsque les bilames sont traversées par un courant électrique, elles dissipent une énergie qui en provoque la dilatation différenciée selon le matériau.

Dans une variante, le même matériau peut être utilisé pour deux parties de l'actionneur, ces deux parties ayant une géométrie différente, ce qui induit un échauffement différent et donc une dilatation différenciée.

Avantageusement en pratique, le dispositif peut être tel que le passage de courant provoque l'escamotage de la partie mobile, de sorte que cette consommation électrique n'a lieu que pendant les courtes périodes de mise en place de la fibre optique.

D'autres variantes peuvent être envisagées dans lesquelles le déplacement de la partie mobile est obtenu par piézoélectrique, ou tout simplement par effet mécanique, par exemple avec une pointe de touche.

Bien que ce ne soit pas obligatoire, le maintien de la fibre optique peut être complété par le dépôt d'un adhésif assurant la solidarisation définitive de la fibre optique dans la rainure (2).

De façon générale, les substrats utilisés peuvent être du type silicium sur isolant (SOI) usiné selon les techniques classiques.

Il ressort de ce qui précède que le dispositif conforme à l'invention présente de multiples avantages :
- la possibilité d'un alignement optimal de la fibre optique par rapport à une position de référence ;
- la possibilité de régler l'alignement autant de fois que nécessaire, par le déplacement de la partie mobile, sans contraintes sur la fibre ;
- la conservation d'une rectitude des fibres optiques dans leur segment extrémal grâce à la longueur relativement importante sur laquelle est exercée la force de plaquage ;
- la consommation d'énergie électrique limitée aux seules phases de mise en place de la fibre ;

## Revendications

1. Dispositif permettant le positionnement et le maintien de l'extrémité (4) d'une fibre optique (3) à l'intérieur d'un substrat (1), **caractérisé en ce que** :
• le substrat (1) comporte une rainure (2) destinée à accueillir l'extrémité (4) de la fibre optique (3), ladite rainure (2) possédant au moins une paroi plane (8) perpendiculaire au plan principal (9) du substrat (1) ;
• la rainure (2) comporte une partie mobile (5), localisée sur la face opposée à la paroi plane (8), et apte à se déplacer en direction de ladite paroi plane (8) entre deux positions, à savoir :
. une position escamotée dans laquelle l'extrémité de la fibre optique (3) peut pénétrer librement dans la rainure (2) ;
. une position de blocage dans laquelle la partie mobile (5) vient au contact de la fibre optique (3) pour la plaquer contre ladite paroi plane (8) ;
• il comporte des moyens (21, 24) permettant d'exercer une force sur la partie mobile (5) pour en provoquer le déplacement par rapport à la paroi plane (8).

2. Dispositif selon la revendication 1, **caractérisé en ce qu'**il comporte également des moyens de rappel (17, 18) aptes à s'opposer au déplacement de la partie mobile sous l'action de ladite force.

3. Dispositif selon la revendication 1, **caractérisé en ce que** les moyens permettant d'exercer une force sur la partie mobile permettent de déplacer la partie mobile de la position escamotée vers la position de blocage.

4. Dispositif selon la revendication 1, **caractérisé en ce que** les moyens permettant d'exercer une force sur la partie mobile permettent de déplacer la partie mobile de la position de blocage vers la position escamotée.

5. Dispositif selon la revendication 2, **caractérisé en ce que** les moyens de rappel sont formés de deux poutres (17, 18) en substrat reliant la partie mobile (5) au reste du substrat (1), lesdites poutres (17, 18) étant orientées sensiblement parallèlement à l'axe principal (6) de la rainure (2).

6. Dispositif selon la revendication 1, **caractérisé en ce que** la force exercée sur la partie mobile est de nature électrostatique.

7. Dispositif selon la revendication 6, **caractérisé en ce que** les moyens pour exercer la force sur la partie mobile comportent deux ensembles de lamelles (22, 23) formant deux peignes interdigités (21, 24), un de ces peignes (21) étant solidaire de la partie mobile, l'autre peigne (24) étant solidaire du reste du substrat (1), l'application d'une tension électrique entre les deux peignes (21, 24) en provoquant le rapprochement.

8. Dispositif selon les revendications 2, 4 et 7, **caractérisé en ce que** l'application de la tension électrique provoque le passage de la partie mobile (5) de la position de blocage vers la position escamotée, la disparition de cette tension permettant aux moyens de rappel de provoquer le retour de la partie mobile (5) en position de blocage.

9. Dispositif selon les revendications 2, 3 et 7, **caractérisé en ce que** l'application de la tension électrique provoque le passage de la partie mobile de la position escamotée à la position de blocage, la disparition de cette tension permettant aux moyens de rappel de provoquer le retour de la partie mobile en position escamotée.

10. Dispositif selon la revendication 1, **caractérisé en ce que** la force exercée sur la partie mobile est de nature électrothermique, piézoélectrique, magnétostatique ou mécanique.
